# EUROPEAN PATENT SPECIFICATION

(11) **EP 3 756 094 B1**
(45) Date of publication and mention of the grant of the patent: **04.06.2025**
(21) Application number: 18726257.1
(22) Date of filing: 18.04.2018
(51) Int. Cl.: G06F 9/50

(54) **INTER DEVICE TRANSFER OF RESOURCES FOR EXECUTING APPLICATION UPDATE CYCLES**
ÜBERTRAGUNG VON RESSOURCEN ZWISCHEN VORRICHTUNGEN ZUR AUSFÜHRUNG VON ANWENDUNGSAKTUALISIERUNGSZYKLEN
TRANSFERT INTER-DISPOSITIFS DE RESSOURCES POUR EXÉCUTER DES CYCLES DE MISE À JOUR D'APPLICATION

(43) Date of publication of application: 30.12.2020
(73) Proprietor: Google LLC, Mountain View, CA 94043 (US)
(72) Inventor: QUINTANA, Fred, Mountain View, California 94043 (US); ADATIA, Rahim, Mountain View, California 94043 (US); FANDRIANTO, Alex, Mountain View, California 94043 (US); FARROW, David Carl, Mountain View, California 94043 (US); KRAKAUER, Kevin, Mountain View, California 94043 (US)
(74) Representative: Thorniley, Peter
(86) International application number: PCT/US2018/028201
(87) International publication number: WO 2019/203825

(56) References cited:
- WO-A1-2013/020224
- GB-A- 2 404 758
- US-A1- 2003 182 425
- US-A1- 2014 007 069
- US-A1- 2015 207 750
- US-B1- 9 081 627

## Description

### BACKGROUND

Some computing devices update applications by communicating with remote systems that support application markets, stores, or other such repositories. A developer may upload an application update to a remote system. In response, the remote system may push the application update to computing devices that execute an older version of the application that needs updating.

At least partly to ensure the integrity of application downloads and updates, as well as for other reasons (e.g., to save money that might otherwise be incurred using an Internet service implemented over WiFi^{®}, cellular, or other type of network that requires a user fee), some remote systems may refrain from sending an application update until a target computing device can communicate with the remote system via a free Wi-Fi^{®} or other relatively inexpensive, reliable, high-bandwidth connections. However, some computing devices communicate almost exclusively via cellular or other less reliable or lower-bandwidth connections that may not always satisfy the connectivity requirements imposed by such remote systems. As a result, a computing device that infrequently maintains a network connection that satisfies a remote system's connectivity requirements may not always receive application updates in a timely manner, if at all.
GB 2 404 758 A discloses balancing resources between computers in a peer to peer network. The balancing involves determining an amount of transferable resource residing at a local peer computer and an amount of transferable resource which resides on a neighbouring peer computer and assessing the difference between the two amounts. Based upon this assessment a transfer of resource between said local peer computer entity and said neighbouring peer computer entity can be initiated. The assessment is based upon a mathematical difference between the amount of transferable resource resident on the computers compared with a pre-determined threshold value.
WO 2013/020224 A1 provides an approach for dynamically acquiring computing resources in a networked computing environment (e.g., a cloud computing environment) based on infrastructure/computing resource needs.

### SUMMARY

The matter for protection is defined by the appended claims. In general techniques of this disclosure are directed to enabling intra-device transfers of application resources that are required by devices to perform local updates of applications executing at the devices as well as to perform other operations that require additional data not already stored on-device. As used herein, the term "application resources" represents one or more libraries, expansion packs (e.g., map packs, translation or language packs, additional game challenges, game levels, etc.), source files, executable packages, media content (e.g., audio or video files), other application information (e.g., news-related content, promotions, advertising information) or other software components that are generally user independent (i.e., not user specific) and used during local installation, execution, or update of one or more executable applications or computing services. Rather than maintain a connection to a remote system to obtain application resources that are required to perform an application update, an example computing device executes a download manager that negotiates transfers of application resources from other nearby devices that are required to perform the update. For example, applications executing at the example computing device may, over time, register with the download manager resource needs (e.g., libraries, source files, executable packages, or other software component that is required to perform an application update) for their respective update cycles.

On behalf of the registered applications, the download manager may seek out other nearby computing devices that already have the software components that can satisfy at least some of the registered resource needs. In response to identifying a nearby device that can satisfy at least one registered need, the example computing device may establish a direct communication link with the nearby device to transfer to the example computing device the software component(s) that satisfy the at least one registered need. In response, the download manager executing at the computing device may notify a waiting application of a new available resource, thereby enabling the waiting application to complete its application update without necessarily having to communicate directly with a remote computing system that supports an application market, application store, or other such application repository.

Throughout the disclosure, examples are described where a computing device and/or computing system may analyze information (e.g., application resource needs and the like) associated with the computing device only if the computing device and/or the computing system receives explicit permission from a user of the computing device to analyze the information. For example, in situations discussed below in which the computing device and/or computing system may collect information about available resources or resource needs of applications executing at the computing device, the user may be provided with an opportunity to provide input to control whether programs or features of the computing device (e.g., a download manager) can collect and make use of the information and may further be provided with an opportunity to control what the programs or features can or cannot do with the information. In addition, certain information may be pre-treated in one or more ways before it is transferred, stored, or otherwise used by a computing device and/or computing system, so that personally-identifiable information is removed. For example, before an example computing device transfers an available resource to a computing device in-need, the example computing device may pre-treat the available resource to ensure that any user identifying information embedded in the available resource is removed. Thus, the user may have control over whether information is collected about the user and how such information, if collected, may be used by the computing device and/or computing system.

A method is provided in accordance with claim 1.

A computing device is provided in accordance with claim 13.

In one example, the computing device includes a communication unit; a memory configured to store instructions associated with a download manager; and at least one processor configured to execute the instructions associated with the download manager.

A computer-readable storage medium is provided in accordance with claim 14.

The details of one or more examples are set forth in the accompanying drawings and the description below. Other features, objects, and advantages of the disclosure will be apparent from the description and drawings, and from the claims.

### BRIEF DESCRIPTION OF DRAWINGS

FIG. 1 is a conceptual diagram illustrating an example computing system configured to enable inter-device exchanges of applications resources required to execute application update cycles, in accordance with one or more aspects of the present disclosure.
FIG. 2 is a block diagram illustrating an example computing system configured to execute inter-device exchanges of applications resources required to execute application update cycles, in accordance with one or more aspects of the present disclosure.
FIG. 3 is a conceptual diagram illustrating an example inter-device network configured to enable inter-device exchanges of applications resources required to execute application update cycles, in accordance with one or more aspects of the present disclosure.
FIG. 4 is a flowchart illustrating example operations performed by an example computing device configured to execute inter-device exchanges of applications resources required to execute application update cycles, in accordance with one or more aspects of the present disclosure.

### DETAILED DESCRIPTION

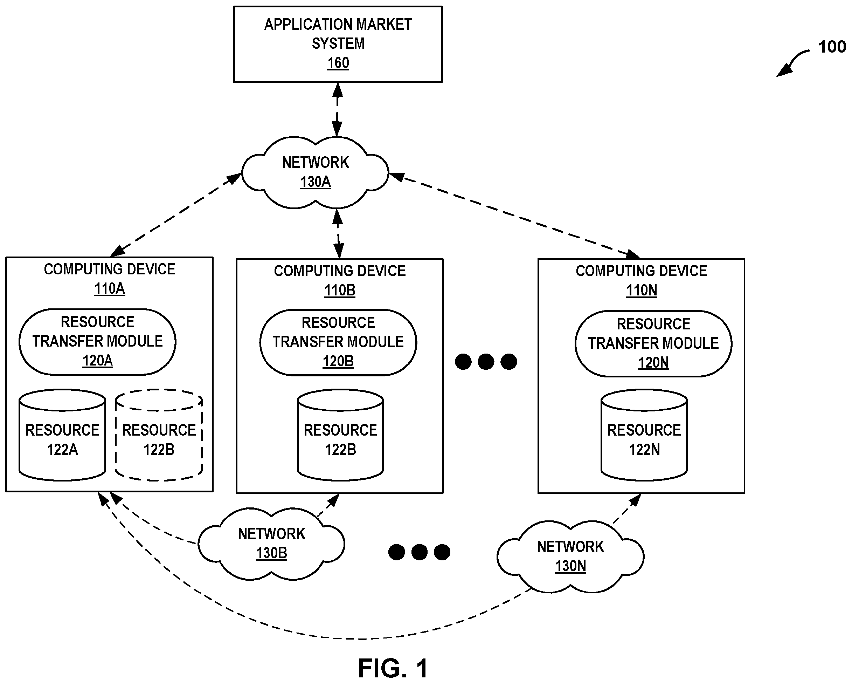

FIG. 1 is a conceptual diagram illustrating an example computing system configured to enable inter-device exchanges of applications resources required to execute application update cycles, in accordance with one or more aspects of the present disclosure. System 100 includes computing devices 110A through 110N (collectively referred to as "computing devices 110") and remote computing system 160. Each of computing devices 110 and remote computing system 160 may communicate over network 130A. Computing devices 110A and 110B may further communicate over network 130B and computing devices 110A and 110N may further communicate over network 130N.

Remote computing system 160 represents any suitable computing systems (e.g., desktop computers, laptop computers, mainframes, servers, blades, cloud computing systems, or other type of remote computing systems) capable of exchanging information via a network (such as network 130A), specifically, as part of an application market and application update service. Although shown as being a single computing system, remote computing system 160 may be a single, remote computing system or may include multiple remote computing systems.

Remote computing system 160 is configured to support, and provide computing devices 110 with access to, an application market or repository. That is, remote computing system 160 may enable access, via network 130A, to an application repository from which computing devices 110A through 110N can download applications or application updates. For example, remote computing system 160 may enable computing device 110A to download an application installation package from remote computing system 160 that computing device 110A then executes locally at computing device 110A to install a local copy of the application.

In some examples, remote computing system 160 is configured to initiate application update cycles at devices that access the application market or repository supported by remote computing system 160. For example, remote computing system 160 may communicate with each of computing devices 110 to schedule a respective application update cycle at each of computing devices 110.

Network 130A represents a reliable, inexpensive, high-bandwidth, network that satisfies connection requirements established by remote computing systems 160 for accessing the application repository of remote computing system 160. For example, network 130A may be a public or private Wi-Fi^{®} network that facilitates data transmissions between remote computing system 160 and computing devices 110. Network 130A may include one or more network hubs, network switches, network routers, or any other network equipment, that are configured to establish wired or wireless communication links (e.g., Ethernet) between two of computing system 160 and computing devices 110 so as to enable the exchange of information between computing system 160 and computing devices 110. Computing system 160 and computing devices 110 may exchange, i.e., transmit and receive, data across network 130A using any suitable communication techniques.

Each of computing devices 110 represents any suitable computing device (e.g., desktop computer, laptop computer, mobile device - including mobile phones and tablet computers, wearable device, or any other type of computing device) capable of exchanging information via network 130A to access the application repository supported by remote computing system 160A. That is, computing device 110A may be a mobile phone configured to download application packages from remote computing system 160.

Each of computing devices 110 includes one or more respective application resources 122A through 122N (collectively referred to as "application resources 122"). Each of application resources 122 represents one or more libraries, expansion packs (e.g., map packs, translation or language packs, additional game challenges, game levels, etc.), source files, executable packages, media content (e.g., audio or video files), other application information (e.g., news-related content, promotions, advertising information) or other software components that are generally user independent (i.e., not user specific) and used during local installation, execution, or update of one or more executable applications or computing services.

Each of computing devices 110 further includes a respective resource transfer (RT) module 120A through 120N (collectively "RT modules 120") that is configured to maintain information about respective resources required for updating applications or other respective application resource needs of locally executing applications and negotiate transfers of application resources 122 between computing devices 110 to satisfy the respective application resource needs. For example, rather than establish a network connection with remote computing system 160 to obtain a particular update package that is required to update a particular application executing at computing device 110A, RT module 120A may negotiate with RT modules 120B through 120N to obtain the particular update package directly from one of computing devices 110B through 110N that previously obtained the update package (e.g., from remote computing system 160). RT modules 120 may be implemented in hardware, software, firmware, or any combination thereof.

Each of RT modules 120 provides a registration scheme that enables applications executing at respective computing devices 110 to indicate, over time, resource needs for their respective update cycles. For example, RT module 120A may maintain a resource list that indicates the particular software components required by applications, executing at computing device 110A, to complete an application update. In some examples, the registration scheme further enables applications executing at respective computing devices 110 to indicate any existing application resources that are available for use by other applications executing at other computing devices 110 to perform their respective updates. For example, RT module 120B may maintain a resource list that indicates a particular software component, used by an application executing at computing device 110B to perform an update, is available for transfer to other computing devices 110 to enable other applications to perform an application update. In this way, the registration scheme enables each of RT modules 120 to keep track of the resource needs of the applications executing at respective computing devices 110 (and in some cases, the resources available to other computing devices 110 to satisfy their respective resource needs) so that two RT modules 120 can negotiate a transfer of resources between respective computing devices 110 to ultimately complete an update cycle without having to communicate with remote computing system 160.

In operation, each of computing devices 110 initiates an update cycle of applications executing at computing devices 110. For example, computing devices 110 may check for application updates at approximately, a same predetermined time. The predetermined time may be established: by remote computing device 160, by a factory device during initial programming, following an operating system update, or communicated to computing devices 110 in some other way. In some examples, computing devices 110 may receive respective instructions from a remote system, such as remote computing system 160, that causes computing devices 110 to initiate respective update cycles. Another way that computing devices 110 may determine the time to initiate an update cycle may be to have a "random", yet deterministic time each day. For example, if one of computing devices 110 is configured to initiate an update cycle a certain number of times each day (e.g., twice a day, twelve times a day, once an hour, or any other suitable interval), computing device may divide each day into one or more update intervals (i.e., the time between each update cycle). One of computing devices 110 may initiate an update cycle by randomly determining, using a seed derived from a start time of the update interval, a particular time in an update interval at which to initiate the update cycle. In some examples, one of computing devices 110 may impose blackout periods where no update cycles are permitted to occur during each update interface (e.g., at two minutes around each half hour to enable one of computing devices 110 to prevent the update cycles from interfering with any other operation that is scheduled to occur during the blackout periods. In any event, once an update cycle is initiated, RT modules 120 take-over the negotiation and exchange of application resources among computing devices 110 so as to complete their respective update cycles.

Computing device 110A may broadcast an indication that computing device 110A is initiating an update cycle of one or more applications executing at computing device 110A. For example, RT module 120A may implement a device discovery process to identify any computing devices 110 that are in-range for performing a device-to-device transfer of application resources required to complete an application update. The device discovery process may include establishment of a person area network (PAN), such as those configured in accordance with a Bluetooth^{®} protocol or some other communication standard (e.g., Wi-Fi Direct^{®}, ZigBee^{®}, infrared, near field communication, and ultraband) for performing device discovery techniques. In other words, RT module 120A may cause computing device 110A to output information indicating that computing device 110A is ready to negotiate with any other computing devices 110 that are within range of computing device 110A and that are also performing an update cycle. RT module 120A may cause computing device 110A to establish, sequentially or in parallel, communication sessions with each one of computing devices 110B through 110N that responds to the broadcast.

With one of computing devices 110B through 110N that received the indication that computing device 110A is initiating the update cycle (where the "one of computing devices 110B-110N may be referred to as "the other device 110"), computing device 110A may communicate information about at least one of: available resources of computing device 110A or resource needs of computing device 110A. For example, responsive to receiving an acknowledgement from RT module 120B that computing device 110B received the broadcast generated by RT module 120A, RT module 120A and RT module 120B may establish a first communication session, shown in FIG. 1 as network 130B, to share information about available resources and resource needs. Likewise, responsive to receiving an acknowledgement from RT module 120N that computing device 110N received the broadcast generated by RT module 120A, RT module 120A and RT module 120N may establish a second communication session, shown in FIG. 1 as network 130N, to share information about available resources and resource needs. At least part of networks 130B and 130N may be implemented as PANs, such as Bluetooth^{®} connections or as some other type of network connection that enables device-to-device communication (e.g., Wi-Fi Direct^{®}, ZigBee^{®}, infrared, near field communication, wireless area networks - WANs, and ultraband).

Computing device 110A may negotiate a transfer of information with the other one of computing devices 110 so that at least one of the two devices 110, i.e., computing device 110A and/or the other device 110, may complete their respective update cycles. Such information may include at least some of the available resources of computing device 110A that are required to satisfy the respective resource needs of the other device 110. In addition, or alternatively, the information may include at least some available resources of the other one of computing devices 110 to satisfy at least some of the resource needs of computing device 110A. For example, RT module 120A and RT module 120B may share their respective resource needs to determine whether any may be satisfied by a software component exchange. RT module 120A may provide RT module 120B with information about resources 122A and RT module 120A may receive from RT module 120B, information about resources 122B. RT modules 120A and 120B may compare their respective resource needs with the available resources of the other to determine whether to establish a resource transfer. Either following the negotiation, or while negotiating, with RT module 120B, RT module 120A and RT module 120N may likewise share their respective resource needs to determine whether any may be satisfied by a software component exchange.

Computing device 110A may establish a communication channel with the other one computing devices 110 for implementing the transfer. For example, by utilizing network 130B or by establishing a separate, dedicated communication channel with computing device 110B, RT module 120A and RT module 120B may implement an exchange of application resources so that either may complete its update cycle.

In some examples, the dedicated communication channel is implemented using a Wi-Fi^{®} hotspot or other local area network protocol. In some cases, the dedicated communication channel is implemented over Bluetooth^{®}, Wi-Fi Direct^{®}, ZigBee^{®}, infrared, near field communication, ultraband or some other type of network connection. For instance, computing device 110A and computing device 110N may exchange resources using the same network 130B that was used during the negotiation or using a different Bluetooth^{®} connection. In other examples, the dedicated communication channel may be implemented as a local Wi-Fi^{®} connection shared between two devices. For instance, computing device 110A may create a hotspot that computing device 110N can connect with to implement the transfer.

As one example, RT module 120B may create a channel by generating a Wi-Fi^{®} hotspot as part of network 130B and provide RT module 120A with access to the channel. RT module 120B may then cause computing device 110B to send, via the dedicated channel, a copy of resource 122B which matches one of the resource needs registered to RT module 120A.

In any case, responsive to implementing the transfer over the dedicated communication channel, computing device 110A may complete execution of the update cycle of the one or more applications executing at computing device 110A. For example, after obtaining resource 122B from computing device 110B, RT module 120A may notify any application that registered the need for resource 122B that resource 122B is now available locally (e.g., on-device) for use to complete an update.

In this way, applications executing at a computing device are able to obtain application resources that are required to complete an update cycle, without necessarily ever having to communicate directly with a remote computing system that initially provides the required resources. Such a benefit is particularly advantageous for mobile phones that maintain cellular data connections (e.g., 3G, 4G, 5G, LTE, or other type of cellular data connection) but rarely or never connect to Wi-Fi^{®}. Computing devices that perform the described inter-device resource transfers may ensure that applications executing on-device can and do remain up-to-date.

Accordingly, the techniques of this disclosure may improve the underlying operation of devices that perform application updates by enabling the devices to automatically pre-fetch resources required to perform an update, from a trusted device that is located nearby, instead of having to communicate with a remote server. By utilizing a channel with a nearby device, an example computing device may obtain required resources with less latency than if the device were to communicate (e.g., over the Internet) with a remote server. In addition, an example computing device may obtain required resources with more regularity as the device need not ever have to satisfy network requirements imposed by a remote server for downloading application updates. Instead, the resource transfers occur despite any network limitation of a recipient device itself. Furthermore, as monetary costs associated with cellular network usage may be a concern for users, the described techniques may offer significant monetary cost savings by enabling devices to obtain required application resources via local peer-to-peer networks established by nearby devices. In addition, besides monetary costs savings, the described techniques may provide electrical energy consumption savings over performing updates using a cellular connection or in other ways; for example, as cellular radios typically consume more power than Bluetooth^{®}, Wi-FI^{®} and some other types of radios, enabling devices to update application in ways that may avoid using a cellular connection may save battery and other energy consumption. By enabling devices to remain up-to-date with more regularity, the described techniques may ensure that locally executing applications are the most recently released versions, which may improve device security and functionality.

It should be understood that although the techniques are described throughout this disclosure as being applicable to completing "application update cycles" via inter-device transfers of application resources that are needed to complete the application update cycles, other use cases for performing inter-device transfers of application resources may exist. For example, a map application executing at an example computing device, such as computing device 110A, may determine that a location of the computing device is outside a geographical area supported by existing map packs of the map application. In response, the map application may register a requirement with an example resource transfer module, such as RT module 120A, for one or more map packs associated with the device location. When the computing device initiates an update cycle, the resource transfer module may negotiate with other computing devices to determine whether any are executing a corresponding map application that already has the required map packs. In accordance with the described techniques, the computing device may negotiate and implement a transfer with the other nearby devices to obtain copies of the required map packs.

Similar techniques to the above map application example may be performed by a computing device that executes a translation application in need of new language packs for a different location. For instance, an example computing device may negotiate and implement a transfer with other nearby devices to obtain copies of required language packs.

As yet another example, a media application executing at an example computing device, such as computing device 110A, may determine that certain media content (e.g., music, video, or other media content) is likely to be requested by a user of the computing device at some time in the near future. For instance, the media application may maintain information about a user's music preferences and in response to determining that a new album from a favorite artist indicated in the music preferences is available from a music service, and has not yet been downloaded to the device's locally-stored song library. In response, the media application may register a requirement with the resource transfer module for copies of the songs of the new album. When the computing device initiates an update cycle, the computing device may negotiate with other computing devices to determine whether any nearby devices have already obtained local copies of the songs. In accordance with the described techniques, the computing device may negotiate and implement a transfer with the other nearby devices to obtain copies of the requested songs.

Similar techniques to the above media application example may be performed by a computing device that executes other types of applications that are in need of new or updated resources. For instance, an example computing device may negotiate and implement a transfer with other nearby devices to obtain copies of news-related content that has been requested by a news application executing at the device. An example computing device may negotiate and implement a transfer with other nearby devices to obtain copies of promotional or advertising content that has been requested by an application executing at the device.

Throughout the disclosure, examples are described where a computing device and/or computing system may analyze information (e.g., application resource needs and the like) associated with the computing device only if the computing device and/or the computing system receives explicit permission from a user of the computing device to analyze the information. For example, in situations discussed below in which the computing device and/or computing system may collect information about available resources or resource needs of applications executing at the computing device, the user may be provided with an opportunity to provide input to control whether programs or features of the computing device (e.g., a download manager) can collect and make use of the information and may further be provided with an opportunity to control what the programs or features can or cannot do with the information. In addition, certain information may be pre-treated in one or more ways before it is transferred, stored, or otherwise used by a computing device and/or computing system, so that personally-identifiable information is removed. For example, before an example computing device transfers an available resource to a computing device in-need, the example computing device may pre-treat the available resource to ensure that any user identifying information embedded in the available resource is removed. Thus, the user may have control over whether information is collected about the user and how such information, if collected, may be used by the computing device and/or computing system. These are just a few example use cases for the described techniques; other use cases for performing inter-device transfers of application resources may exist.

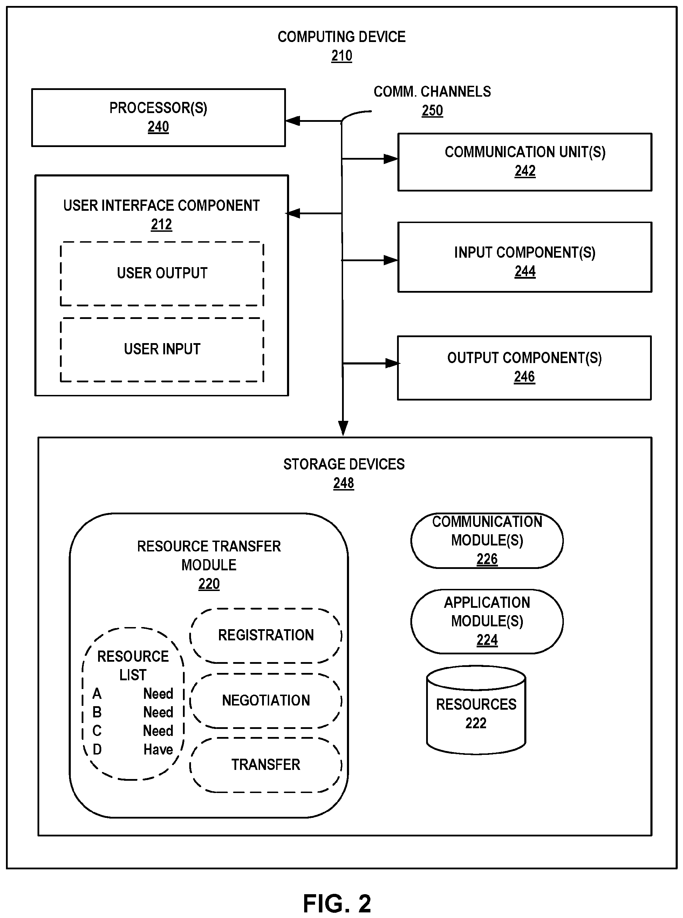

FIG. 2 is a block diagram illustrating an example computing system configured to execute inter-device exchanges of applications resources required to execute application update cycles, in accordance with one or more aspects of the present disclosure. Computing device 210 of FIG. 2 is described below as an example of any one of computing devices 110A through 110N of FIG. 1. FIG. 2 illustrates only one particular example of computing device 210, and many other examples of computing device 210 may be used in other instances and may include a subset of the components included in computing device 210 or may include additional components not shown in FIG. 2.

As shown in the example of FIG. 2, computing device 210 includes: user interface component (UIC) 212, one or more processors 240, one or more communication units 242, one or more input components 244, one or more output components 246, and one or more storage components 248. UIC 212 includes display component 202 and presence-sensitive input component 204. Storage components 248 of computing device 210 includes instructions and other data associated with: resource transfer (RT) module 220, one or more application modules 224, one or more communication modules 226, and resources data store 222.

Communication channels 250 may interconnect each of the components 212, 240, 242, 244, 246, and 248 for inter-component communications (physically, communicatively, and/or operatively). In some examples, communication channels 250 may include a system bus, a network connection, an inter-process communication data structure, or any other method for communicating data.

One or more communication units 242 of computing device 210 may communicate with external devices via one or more wired and/or wireless networks by transmitting and/or receiving network signals on the one or more networks. Examples of communication units 242 include a network interface chip (e.g. such as an Ethernet chip), an optical transceiver, a radio frequency transceiver, a GPS receiver, or any other type of device that can send and/or receive information. Other examples of communication units 242 may include short wave radios, cellular data radios (e.g., 3G, 4G, 5G, LTE), Bluetooth^{®} radios, Wi-Fi^{®} radios, other wireless network radios, as well as universal serial bus (USB), proprietary bus, or other bus type controllers.

One or more input components 244 of computing device 210 may receive input. Examples of input are tactile, audio, and video input. Input components 242 of computing device 210, in one example, includes a presence-sensitive input device (e.g., a touch sensitive screen, a UID), mouse, keyboard, voice responsive system, video camera, microphone or any other type of device for detecting input from a human or machine. In some examples, input components 242 may include one or more sensor components one or more location sensors, one or more temperature sensors, one or more movement sensors (e.g., accelerometers, gyros), one or more pressure sensors (e.g., barometers), one or more ambient light sensors, and one or more other sensors (e.g., microphone, camera, infrared proximity sensor, hygrometer, and the like). Other sensors may include a heart rate sensor, magnetometer, glucose sensor, hygrometer sensor, olfactory sensor, compass sensor, step counter sensor, to name a few other non-limiting examples.

One or more output components 246 of computing device 210 may generate output. Examples of output are tactile, audio, and video output. Output components 246 of computing device 210, in one example, includes a sound or audio processor, video or graphics processor, a speaker, a display, a vibration device, a liquid crystal display (LCD), a light emitting diode (LED) display, or any other type of device configured to generate output to a human or machine.

UIC 212 is configured to provide a user interface associated with computing device 210. As such, UIC includes user input and user output functionality and may be implemented using various technologies. For instance, UIC 212 may function as an input device using presence-sensitive input screens, microphone technologies, infrared sensor technologies, or other input device technology for use in receiving user input. UIC 212 may function as an output device configured to present output to a user using any one or more display devices, speaker technologies, haptic feedback technologies, or other output device technology for use in outputting information to a user. As an input device, UIC 212 detects input (e.g., touch and non-touch input) from a user. Examples of user input include gestures performed by a user (e.g., the user touching, pointing, and/or swiping at or near one or more locations of UIC 212 with a finger or a stylus pen). As an output device, UIC 212 presents information (e.g., audible, visual, and/or haptic information) to a user in the form of audible, visual, or haptic feedback.

One or more processors 240 may implement functionality and/or execute instructions associated with computing device 210. Examples of processors 240 include application processors, graphics processors, communications processors, application specific processors, display controllers, bus controllers, auxiliary processors, sensor hubs, and any other hardware configured to function as a processor, a processing unit, a processing component, or a processing device.

Software portions of modules 220, 224, and 226 may be operable by processors 240 to perform various actions, operations, or functions of computing device 210. For example, processors 240 of computing device 210 may retrieve and execute instructions stored by storage components 248 that cause processors 240 to perform the operations attributed to modules 220, 224, and 226. The instructions, when executed by processors 240, may cause computing device 210 to access or store information, for example resources data store 222, within storage components 248.

One or more storage components 248 within computing device 210 may store information for processing during operation of computing device 210 (e.g., computing device 210 may store data accessed by or otherwise associated with modules 220, 224, and 226 during execution at computing device 210). In some examples, storage component 248 is a temporary memory, meaning that a primary purpose of storage component 248 is not long-term storage. Storage components 248 on computing device 210 may be configured for short-term storage of information as volatile memory and therefore not retain stored contents if powered off. Examples of volatile memories include random access memories (RAM), dynamic random-access memories (DRAM), static random access memories (SRAM), and other forms of volatile memories known in the art.

Storage components 248, in some examples, also include one or more computer-readable storage media. Storage components 248 in some examples include one or more non-transitory computer-readable storage mediums. Storage components 248 may be configured to store larger amounts of information than typically stored by volatile memory. Storage components 248 may further be configured for long-term storage of information as non-volatile memory space and retain information after power on/off cycles. Examples of non-volatile memories include magnetic hard discs, optical discs, floppy discs, flash memories, or forms of electrically programmable memories (EPROM) or electrically erasable and programmable (EEPROM) memories. Storage components 248 may store program instructions and/or information (e.g., data) associated modules 220, 224, and 226. Storage components 248 may include a memory configured to store data or other information associated with modules 220, 224, and 226.

Application modules 224 represent any application executing at computing device 210. Examples of application modules 224 include: map or navigation software, media players, messenger clients, social media clients, calendars, email clients, games, electronic assistants, developer tools, utility software, or any other type of software executable that may run on a computing device. Computing device 210 may download at least some of application modules 224 from an application repository maintained by a remote computing system, such as remote computing system 160 of FIG. 1. As is described in more detail below, at least some of application modules 224 may access resources data store 222. Resources data store 222 may contain information that one or more of application modules 224 uses to perform a function, such as updating to a newer version of software.

Communication modules 226 work with communication units 242 to handle communications between computing device 210 and other computing devices. As one example, communication modules 226 may control a Bluetooth^{®} radio of communication units 242, for instance, to discover, on behalf of RT module 220, whether any other nearby devices are initiating an application update cycle. As another example, communication modules 226 may control a Wi-Fi^{®} radio of communication units 242, for example, to establish, on behalf of RT module 220, a communication channel for transferring application resources between computing device 210 and other nearby devices during an application update cycle.

RT module 220 is an example of RT modules 120 of FIG. 1. For ease of description, RT module 220 is shown in FIG. 2 as having four primary functions: maintaining a resource list, providing a registration interface, negotiating for resources, and transferring resources. Although in other examples, RT module 220 may include additional or fewer primary functions.

RT module 220 maintains a resource list of any resources required by any of application modules 224, e.g., to complete an update. While described as being "a list", the resource list maintained by RT module 220 may be implemented as any type of data structure that enables efficient access and modifications to a grouping of stated application resources and needs. In some examples, the resource list may indicate which one or more of application modules 224 requested a particular resource, as well as whether that particular resource has been obtained and stored at resources data store 222. RT module 220 may update the resource list over time as resource availabilities and needs of computing device 210 change.

RT module 220 provides an application programming interface (API) from which one or more of application modules 224 can register available resources, as well as, resource needs. For example, RT module 220 may receive, via the registration API, information indicating that one of application modules 224 requires resource A, resource B, resource C, and resource D to complete an update. RT module 220 may update the resource list to indicate the need for resource A, resource B, resource C, and resource D. At a later time, as RT module 220 obtains required resources on the list, RT module 220 may update the resource list to indicate when resource A, resource B, resource C, and resource D becomes available. RT module 220 may return, via the API, an indication where each of resources A, B, C, and D is located (e.g., within resources data store 222), thereby enabling the one of application modules 224 that registered with RT module 220 to complete its update.

RT module 220 negotiates with remote devices for the exchange of application resources to satisfy each other's application resource needs. For example, RT module 220 may command communication module 226 to initiate a Bluetooth^{®} discovery process to identify any nearby remote devices that are initiating an update cycle concurrently with when computing device 210 initiates an update cycle. For example, RT module 220 may cause communication module 226 to broadcast, via a Bluetooth^{®} radio from communication units 242, a Bluetooth^{®} wireless communication signal as part of the discovery process.

RT module 220 may communicate over Bluetooth^{®} (or other short-range communication protocol) with each of the remote devices identified during the discovery process to determine whether computing device 210 can offer up any available resources from resources data store 222 in exchange for receiving at least some of the required resources that have been registered by one or more application modules 224. For example, RT module 220 may negotiate with two or more remote devices to find a suitable combination of remote devices that can provide application resources A, B, and C, which are all indicated as being requested in the resource list of RT module 220. RT module 220 may offer up resource D as being available for any remote device that is in need.

In some examples, RT module 220 predefines the protocol for transferring resources between computing device 210 and other remote devices. That is, RT module 220 may follow a specific set of requirements or instructions that have been previously established for RT module 220 and other remote devices, for every transfer of resources. Whereas, in some examples, part of the negotiation performed by RT module 220 (e.g., via the Bluetooth^{®} connection) includes negotiating how to transfer resources between computing device 210 and the remote devices.

For example, RT module 220 may negotiate a protocol for the transfer, specifying, for example: how the resources are transferred (e.g., simultaneously - receiving each of A, B, and C while outputting D, sequentially - sending and receiving a single resource at a time, some at a time - receiving some of A, B, and C while or while not simultaneously outputting D, etc.), which party to the transfer will control the transfer (e.g., will the requesting applications exchange data directly, will RT module 220 be in charge of the transfer, will a remote device that is party to the transfer control the transfer), a data block size for the transfer, a transfer rate, and other characteristics of the transfer. In any case, as a result of the negotiations, RT module 220 determines what resources to transfer out, what resources to transfer in, as well as details about how the parties to the transfer have agreed to implement the transfer.

RT module 220 transfers application resources to and from remote devices to satisfy each other's application resource needs. That is, once RT module 220 determines which resources to transfer out to a remote device and which resources to receive from the remote device, RT module 220 may establish a communication channel between computing device 210 and the remote device that satisfies the requirements of the transfer that RT module 220 negotiated earlier. For example, the data stream may utilize a dedicated channel that is accessible via a Wi-Fi^{®} hotspot generated by computing device 210 and offered up to the remote device(s) that will be part of a resource transfer. In some examples, the dedicated communication channel is established as a data stream that exists directly between the requesting applications so the two or more requesting applications control how (e.g., simultaneously, sequentially, one at a time, multiple at a time, etc.) the resources are transferred over the data stream. In other examples, RT module 220 together with or independent of a corresponding RT module that executes at the remote device, controls how the resources are transferred over the data stream.

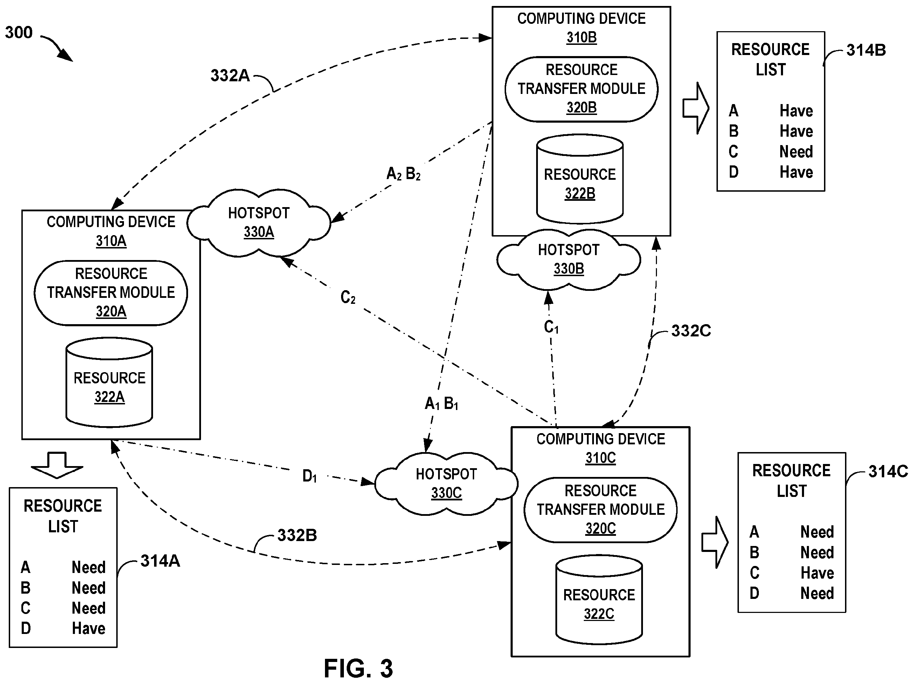

FIG. 3 is a conceptual diagram illustrating an example inter-device network configured to enable inter-device exchanges of applications resources required to execute application update cycles, in accordance with one or more aspects of the present disclosure. System 300 of FIG. 3 is described below as an example of system 100 of FIG. 1. Although FIG. 3 illustrates only one particular example of system 300, and many other examples of system 300 may be used in other instances and may include a subset of the components included in system 300 or may include additional components not shown in FIG. 3.

System 300 includes computing devices 310A, 310B, and 310C (collectively referred to as "computing devices 310"). Each of computing devices 310 is an example of computing device 210 or any of computing devices 110 and as such, each includes a respective resource transfer (RT) module 320A, 320B, or 320C (collectively referred to as "RT modules 320") and a respective resource data store 322A, 322B, or 322C (collectively referred to as "resources 322").

Each of RT modules 320 maintains a respective resource list 314A, 314B, or 314C (collectively "resource lists 314"). That is, one or more respective applications executing at each of computing devices 310 may register one or more application resource needs with a respective one of RT modules 320. Each of RT modules 320 may update the respective one of resource lists 314 as respective resource needs and availability change.

In the example of FIG. 3, one or more applications executing at computing device 310A have indicated to RT module 320A of a need for resources A, B, and C. RT module 320A may have previously obtained resource D. Therefore, RT module 320A may maintain resource list 314A as shown in FIG. 3, to indicate a need for resources A, B, and C, and an availability of resource D. In other words, RT module 310A may determine a respective resource need one or more applications executing at computing device 310A and by pooling together all the respective resource needs of the one or more applications executing at the computing device, RT module 320A may determine the sum total resource needs of computing device 310A. That is, RT module 320A may remove redundant resource needs or redundant available resources that have been registered by applications executing at computing device 310A to determine a consolidated list of all the available and required resources of computing device 310A.

With regards to computing devices 310B and 310C, one or more respective applications executing at computing devices 310B and 310C may have previously registered their resource needs and RT modules 320B and 320C may be tracking respective available resources. Accordingly, RT module 320B may maintain resource list 314B as shown in FIG. 3, to indicate a need for resource C, and an availability of resources A, B, and D. RT module 320C may maintain resource list 314C as shown in FIG. 3, to indicate a need for resources A, B, and D, and an availability of resource C.

In operation, each of computing devices 310 may initiate an update cycle of one or more respective applications at a scheduled or an approximately same predetermined time. Each of computing devices 310 may broadcast a respective indication that the computing device 310 is initiating an update cycle of one or more applications executing at the computing device 310.

In response to outputting an indication that computing device 310A is initiating an update cycle, computing device 310A may communicate with each of computing devices 310B and 310C over, respectively, communication links 332A and 332B. Likewise, computing devices 310B and 310C may communicate via link 332C in further response to either one of computing devices 310B and 310C initiating a respective update cycle. Each of communication links 332A, 332B, and 332C (collectively referred to as "links 332") may comprise a Bluetooth^{®} communication session or other short-range communication session that is suited for exchanging information between two of computing devices 310 to exchange information during negotiation of a resource transfer.

Via links 332, computing devices 310 may share the respective resource needs and availability of each device 310. For instance, RT module 320A may inform, over link 332A, RT module 320B about available resources or resource needs indicated in resource list 314A, and vice versa. RT module 320A may inform, over link 332B, RT module 320C about available resources or resource needs indicated in resource list 314A, and vice versa. RT module 320B may inform, over link 332C, RT module 320B about available resources or resource needs indicated in resource list 314A, and vice versa.

While communicating over link 332B with RT module 320C of computing device 310C, RT module 320A may determine whether any applications executing at computing device 310A have a respective available resource that satisfies at least one of the resource needs indicated in resource list 314C. In the example of FIG. 3, RT module 320A may determine that resource D is an available resource that satisfies at least one resource need of computing device 310C. RT module 320A may further determine that RT module 320C can provide resource C to RT module 320A to satisfy a resource need of computing device 310A.

While communicating over link 332A with RT module 320B of computing device 310B, RT module 320A may determine whether any applications executing at computing device 310A have a respective available resource that satisfies at least one of the resource needs indicated in resource list 314B. In the example of FIG. 3, RT module 320A may determine that computing device 310A is unable to satisfy any resource needs of computing device 310B. However, RT module 320A may determine that resources A and B are available from computing device 310B to satisfy at least one resource need of computing device 310A.

Lastly from communicating with RT module 320C over link 332C, RT module 320B may determine whether any applications executing at computing device 310B have a respective available resource that satisfies at least one of the resource needs indicated in resource list 314C. Likewise, RT module 320C may determine whether any applications executing at computing device 310C have a respective available resource that satisfies at least one of the resource needs indicated in resource list 314B. In the example of FIG. 3, RT module 320B may determine that resource C is an available resource from computing device 310C which satisfies at least one resource need of computing device 310B. RT module 320C may determine that resources A and B are available resources from computing device 310B to satisfy at least one resource need of computing device 310C.

Following negotiations between RT modules 320, each of computing devices 310 may establish a respective dedicated communication channel for implementing a respective transfer of resources. For example, in response to negotiating with RT module 320B, RT module 320A may cause computing device 310A to generate Wi-Fi^{®} hotspot 330A and grant computing device 310B access to hotspot 330A so that computing device 310A may receive resources A and B from computing device 310B. RT module 320A may communicate with RT module 320B to cause one or more applications executing at computing device 310A to obtain required resources A and B.

Concurrent with, prior to, or after the transfer of resources from computing device 310B to computing device 310A, RT module 320A may cause computing device 310A grant computing device 310C access to hotspot 330A so that computing device 310A may receive resource C from computing device 310C. RT module 320A may communicate with RT module 320C to cause one or more applications executing at computing device 310A to obtain required resource C. As a result of obtaining required resources A, B, and C, RT module 320A may have satisfied all resource needs of applications executing at computing device 310A such that computing device 310A may complete execution of the update cycle of computing device 310A.

In a similar vein, in response to negotiating with RT module 320B, RT module 320C may cause computing device 310C to generate Wi-Fi^{®} hotspot 330C and grant computing device 310B access to hotspot 330C so that computing device 310C may receive resources A and B from computing device 310B. RT module 320C may communicate with RT module 320B to cause one or more applications executing at computing device 310C to obtain, via hotspot 330C, required resources A and B.

Concurrent with, prior to, or after the transfer of resources from computing device 310B to computing device 310C, RT module 320C may cause computing device 310C grant computing device 310A access to hotspot 330C so that computing device 310C may receive resource D from computing device 310A. RT module 320C may communicate with RT module 320A to cause one or more applications executing at computing device 310C to obtain required resource D. As a result of obtaining required resources A, B, and D, RT module 320C may have satisfied all resource needs of applications executing at computing device 310C such that computing device 310C may complete execution of the update cycle of computing device 310C.

In response to negotiating with RT module 320C, RT module 320B may cause computing device 310B to generate Wi-Fi^{®} hotspot 330B and grant computing device 310C access to hotspot 330B so that computing device 310C may receive resource C from computing device 310B. RT module 320B may communicate with RT module 320C to cause one or more applications executing at computing device 310B to obtain, via hotspot 330B, required resource C. As a result of obtaining required resource C, RT module 320B may have satisfied all resource needs of applications executing at computing device 310B such that computing device 310B may complete execution of the update cycle of computing device 310B.

By automatically utilizing nearby crowds of devices to distribute application resources and application content through direct, device-to-device transfers, the described techniques may reduce dependency by those computing devices on large-scale data networks or connections to application repositories. In this way, computing devices, such as computing devices 310, are more likely to execute updated and secure applications, automatically, and without necessarily having to obtain explicit user input.

In some examples, the described techniques may be used to share application resources to a particular "closed group" of computing devices and/or to devices at a particular context (e.g., time, date, location, temperature, etc.) that are considered to be part of a "closed group" while at the particular location. Consider an example where a host computing device may be configured to cause application resources to be transferred to the devices in response to the other devices being in a particular location or after having previously registered with a respective RT module a need for application resources from the host device.

For instance, a host device located in an airport that is associated with an airline may wish to distribute a certain set of application resources when passengers' mobile devices are in proximity of a gate terminal or other location monitored by the host device. The host may enable the passengers' mobile devices to pre-register with their respective RT modules a future need for application resources from the host device (e.g., in response to using an airline application to purchase an airline ticket or check-in for a flight). For example, an airline application executing at a mobile device may pre-register with a respective RT module executing at the mobile device to configure the mobile device to obtain application resources required by the airline application to improve the user experience when a passenger interacts with the airline application, before or during the flight. The application resources may include airport maps, airline magazines, videos, games, pictures, other in-flight entertainment, food and beverage menus, or other information. In this way, the airline or other host device may ensure that a closed group of devices obtains the application resources required for a particular scenario. The above airline example is just one example of a "closed-group" application resource distribution example, other examples exist.

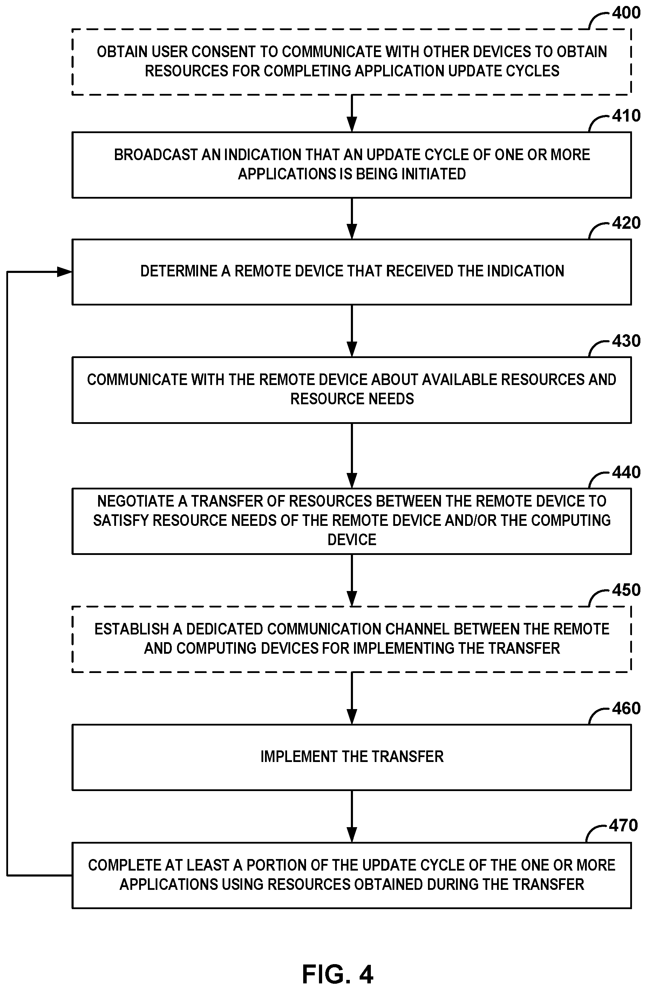

FIG. 4 is a flowchart illustrating operations performed by a computing device configured to execute inter-device exchanges of applications resources required to execute application update cycles, in accordance with one or more aspects of the present disclosure. Operations 400-470 are performed by a computing device, such as any of computing devices 110, 210, and 310, and may be performed in an order different than that shown in FIG. 4. For ease of description, FIG. 4 is described in the context of computing device 210 of FIG. 2.

As shown in FIG. 4, in operation, computing device 210 may obtain user consent for RT module 220 to communicate with other devices to obtain resources for completing application update cycles (400). For example, to preserve user privacy and ensure that a user maintains control of their data, RT module 220 may cause UIC 212 to present a user interface from which a user of computing device 210 can decide whether to provide consent for inter-device transfers of application resources. Via the user interface, the user may provide explicit inputs to either opt-in to, or opt-out of, inter-device transfers of application resources. Without explicit user consent, RT module 220 refrains from negotiating with other devices to obtain resources to satisfy update cycles.

After obtaining user consent (400), computing device 210 broadcasts an indication that an update cycle of one or more applications is being initiated (410). For example, at a random, predetermined, or scheduled time, RT module 220 may engage with communication module 226 to identify any nearby devices that have or need application resources.

Computing device 210 may determine one or more remote devices that received the broadcasted indication and want to negotiate a transfer of resources (420). For example, because of the broadcast during operation 410, RT module 220 may determine a list of one or more remote devices that are available and willing to negotiate.

Computing device 210 communicates, with the one or more remote devices that received the indication that computing device 210 is initiating the update cycle, information about resource needs of computing device 210 (430) and optionally information about available resources of computing device 210. For example, RT module 220 may share the list of registered resource needs and available resources with each of the remote devices identified in list of remote devices that RT module 220 generated during operation 420. In return, RT module 220 may receive a list of registered resource needs and available resources from each of the remote devices. RT module 220 may identify any matches between available resources of computing device 210 and resource needs of the remote devices, as well as any matches between available resources of the remote devices and resource needs of computing device 210. The communicating of resource needs and availability between computing device 210 and one or more remote devices may be done using a short-range communication protocol, such as Bluetooth^{®}, which may be the same or different than the protocol used to broadcast the indication.

Computing device 210 negotiates a transfer of resources between a remote device to satisfy resource needs of the computing device 210 (440) and optionally resource needs of the remote device. For example, based on the matches, RT module 220 and the remote devices may negotiate and perform a transfer of resources. RT module 220 may perform negotiations and transfers of resources with a single remote device at a time. Alternatively, RT module 220 may perform negotiations and transfers of resources with multiple remote devices, simultaneously. For example, computing device 210 may perform operations 420-470 for a single remote device at a time or may perform operations 420-470 to negotiate and transfer resources with multiple remote devices simultaneously. The negotiations may be done using a short-range communication protocol, such as Bluetooth^{®}, which may be the same or different than the protocol used to broadcast the indication.

To speed up a subsequent transfer of resources that are available from multiple remote devices, RT module 220 may negotiate a partial transfer of a particular available resource with two or more of the multiple remote devices. In other words, if RT module 220 requires resource A, and resource A is available from a first remote device and also from a second remote device, RT module 220 may negotiate a transfer of part of resource A from the first remote device and may further negotiate a transfer of any remaining parts of resource A from the second remote device. RT module 220 may cause the partial transfers of available resources to occur simultaneously to obtain all of the available resource quicker; or RT module 220 may cause the partial transfers of available resources to occur sequentially to reduce complexity.

Computing device 210 establishes a communication channel for implementing the transfer (450). For example, RT module 220 may cause computing device 210 to establish a local Wi-Fi^{®} hotspot to facilitate one or more dedicated communication channels that are required to implement one or more transfers. RT module 220 may share a single hotspot with multiple remote devices. That is, RT module 220 may create a dedicated communication channel to stream resources between computing device 210 and a first remote device using a Wi-Fi^{®} hotspot; and RT module 220 may create additional communication channels to stream resources between computing device 210 and other remote devices using the same Wi-Fi^{®} hotspot. Wi-Fi^{®} communication channels are just one example of a dedicated communication channel for implementing a transfer of resources. Other types of communication channels may be used in other instances.

Operation 450 is shown in FIG. 4 as an optional step in the transfer process of FIG. 4. In some cases not the subject of the claims, two computing devices may implement a transfer of application resources over the same communication channel that was used to negotiate the transfer. In other words, RT module 220 of computing device 210 may transfer resources with remote devices using the same Bluetooth^{®} or other such connection used during operation 430 to negotiate the transfer.

In some examples, a computing device that sends application resources during a transfer with another device may establish a communication channel for implementing the transfer. However in other examples, a computing device that receives application resources during a transfer with another device may likewise establish a communication channel for implementing the transfer. In other words, establishing the communication channel for a transfer of application resources may not be dependent on which device (if not both) is sending resources or receiving resources, during the transfer. Either device in a transfer may establish a communication channel for implementing the transfer.

Computing device 210 implements the transfer (460). For example, RT module 220 may cause computing device 210 to send, to a remote device, via the dedicated communication channel, the at least some of the available resources of computing device 210 to satisfy the resource needs of the remote device. In addition, RT module 220 may cause computing device 210 to receive, from the remote device via the dedicated communication channel, the at least some available resources of the remote device to computing device 210 to satisfy at least some of the resource needs of computing device 210. For example, during the above negotiations between RT module 220 and a corresponding RT module executing at a remote device, RT module 220 may establish a transfer plan that includes computing device 210 sending available resource D to the remote device in exchange for required resource A. RT module 220 may cause computing device 210 to stream resource D to the remote device while also causing computing device 210 to stream resource A from the remote device. In some cases, the actual transfer of resources between two devices occurs between the requesting applications executing at the two devices. For instance, one or more of application modules 224 that registered the need for resource A may communicate directly with an application executing at the remote device that possesses resource A to implement the transfer. Similarly, one of application modules 224 that possesses resource D may communicate directly with an application executing at the remote device that needs resource D, in order to implement the transfer.

In any event, responsive to implementing one or more transfers of resources over the dedicated communication channel, computing device 210 completes execution of the update cycle of the one or more applications executing at the computing device (470). For example, following a transfer, RT module 220 may provide any of application modules 224 that registered for a resource, with access to resource once made available following the transfer.

With access to a newly available resource, a particular application from application modules 224 may perform an update of itself, using the newly available resource. That is, the particular application may update, using a resource received from a remote device, from a first version of the particular application to a second version of the particular application.

Accordingly, the particular application may obtain required resources to perform its update without relying on computing device 210 to ever have to satisfy network requirements imposed by a remote server for downloading application updates. By enabling applications to remain up-to-date with more regularity, the described techniques may ensure that locally executing applications are the most recently released versions, which may improve device security and functionality.

By way of example, and not limitation, such computer-readable storage media can comprise RAM, ROM, EEPROM, CD-ROM or other optical disk storage, magnetic disk storage, or other magnetic storage devices, flash memory, or any other storage medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage mediums and media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable medium.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some examples, the functionality described herein may be provided within dedicated hardware and/or software modules. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various embodiments have been described. These and other embodiments are within the scope of the following claims.

## Claims

1. A method comprising:
broadcasting (410), by a computing device (110A, 310A) and via a personal area network protocol, an indication that the computing device is initiating an update cycle of one or more applications executing at the computing device, wherein an update cycle of an application requires one or more application resources;
communicating (430), by the computing device and via the personal area network protocol, with one or more remote devices (110B ... 110N, 310B, 310C) identified as being within range of the computing device and that received the indication that the computing device is initiating the update cycle, information about application resources required by the computing device;
negotiating (440), by the computing device and via the personal area network protocol, with each of the one or more remote devices, a transfer of:
at least some available application resources (322) of each of the one or more remote devices to the computing device to satisfy at least some of the application resources required by the computing device;
establishing (450), by the computing device, with each of the one or more remote devices, one or more respective communication channels for implementing the transfer; and
responsive to implementing (460) the transfer over the one or more respective communication channels, completing (470), by the computing device, execution of the update cycle of the one or more applications executing at the computing device.

2. The method of claim 1, further comprising:
communicating (430), by the computing device and via the personal area network protocol, with the one or more remote devices (110B ... 110N, 310B, 310C), information about available application resources of the computing device; and
negotiating (440), by the computing device and via the personal area network protocol, with each of the one or more remote devices, a transfer of at least some of the available application resources (322) of the computing device to each of the one or more remote devices to satisfy application resources required by each of the one or more remote devices,
wherein implementing the transfer over the one or more respective communication channels further comprises sending, by the computing device, to each of the one or more remote devices via the one or more respective communication channels, the at least some of the available application resources of the computing device to satisfy at least some of the application resources required by each of the one or more remote devices.

3. The method of any of claims 1-2, wherein implementing the transfer over the one or more respective communication channels comprises receiving, by the computing device, from each of the one or more remote devices via the one or more respective communication channels, the at least some available application resources of each of the one or more remote devices to the computing device to satisfy at least some of the application resources required by the computing device.

4. The method of any of claims 1-3, wherein executing the update cycle of the one or more applications executing at the computing device comprises providing the one or more applications with access to the at least some available application resources of each of the one or more remote devices received during the transfer.

5. The method of claim 4, wherein the one or more applications comprise a particular application and executing the update cycle of the one or more applications executing at the computing device comprises updating the particular application from a first version of the particular application to a second version of the particular application using the at least some available application resources of each of the one or more remote devices received during the transfer.

6. The method of any of claims 1-5, wherein the one or more remote devices are a plurality of remote devices that receive the indication that the computing device is initiating the update cycle, the method further comprising:
communicating, with each remote device from the plurality of remote devices, respective information about at least one of: available application resources of the computing device or application resources required by that particular remote device;
negotiating, with each remote device from the plurality of remote devices, a respective transfer of at least one of:
the at least some of the available application resources of the computing device to that remote device to satisfy application resources required by that particular remote device; or
at least some available application resources of that particular remote device to the computing device to satisfy the at least some of the application resources required by the computing device;
establishing, with each remote device from the plurality of remote devices, a respective communication channel for implementing the respective transfer with that particular remote device; and
implementing the respective transfer over the respective communication channel of that particular remote device from the plurality of remote devices.

7. The method of any of claims 1-6, further comprising:
determining, by the computing device, a respective application resource required by each application from the one or more applications executing at the computing device; and
determining, by pooling together all the respective application resources required by the one or more applications executing at the computing device, the application resources required by the computing device.

8. The method of claim 7 when dependent on claim 2, further comprising:
while communicating with the one or more remote devices:
determining, by the computing device, whether any of the one or more applications executing at the computing device have a respective available application resource that satisfies at least one of the application resources required by each of the one or more remote devices; and
determining, by pooling together all the respective available application resources of the one or more applications executing at the computing device, the available application resources of the computing device that satisfy the application resources required by each of the one or more remote devices.

9. The method of any of claims 7-8, further comprising:
pooling, by a download manager component of the computing device that communicates individually with each of the one or more applications executing at the computing device, all the respective available application resources of the one or more applications executing at the computing device to determine, as a consolidated grouping of the available application resources of the computing device that satisfy the application resources required by each of the one or more remote devices.

10. The method of any of claims 1-9, wherein the computing device and the one or more remote devices each comprise a different mobile computing device.

11. The method of any of claims 1-10,
wherein broadcasting the indication that the computing device is initiating the update cycle comprises broadcasting the indication via a Bluetooth^{®} wireless communication signal that is received by each of the one or more remote devices, and
wherein establishing the one or more respective communication channels comprises establishing, by the computing device, a Wi-Fi^{®} hotspot accessible to the remote device.

12. The method of any of claims 1-11, wherein the computing device comprises a first mobile computing device and the one or more remote devices comprises a second mobile computing device that is different than the first mobile computing device.

13. A computing device (110, 310) comprising means for performing any of the methods of claims 1-12.

14. A computer-readable storage medium comprising instructions that, when executed, cause at least one processor of a computing device to perform any of the methods of claims 1-12.

## Patentansprüche

1. Verfahren, umfassend:
Aussenden (410) einer Angabe durch eine Rechenvorrichtung (110A, 310A) und über ein Personal-Area-Network-Protokoll, dass die Rechenvorrichtung einen Aktualisierungszyklus einer oder mehrerer Anwendungen initiiert, die auf der Rechenvorrichtung ausgeführt werden, wobei ein Aktualisierungszyklus einer Anwendung eine oder mehrere Anwendungsressourcen erfordert;
Kommunizieren (430) von Informationen über die für die Rechenvorrichtung erforderlichen Anwendungsressourcen durch die Rechenvorrichtung und über das Personal-Area-Network-Protokoll mit einer oder mehreren entfernten Vorrichtungen (110B ... 110N, 310B, 310C), die als innerhalb der Reichweite der Rechenvorrichtung befindlich identifiziert wurden und die die Angabe erhalten haben, dass die Rechenvorrichtung den Aktualisierungszyklus initiiert;
Verhandeln (440) einer Übertragung durch die Rechenvorrichtung und über das Personal-Area-Network-Protokoll mit jeder der einen oder der mehreren entfernten Vorrichtungen von:
mindestens einigen verfügbaren Anwendungsressourcen (322) jeder der einen oder der mehreren entfernten Vorrichtungen auf der Rechenvorrichtung, um mindestens einige der Anwendungsressourcen zu erfüllen, die für die Rechenvorrichtung erforderlich sind;
Einrichten (450) eines oder mehrerer Kommunikationskanäle durch die Rechenvorrichtung mit jeder der einen oder der mehreren entfernten Vorrichtungen zum Durchführen der Übertragung; und
als Reaktion auf Implementieren (460) der Übertragung über den einen oder die mehreren jeweiligen Kommunikationskanäle, Abschließen (470) der Ausführung des Aktualisierungszyklus der einen oder der mehreren Anwendungen, die auf der Rechenvorrichtung ausgeführt werden, durch die Rechenvorrichtung.

2. Verfahren nach Anspruch 1, ferner umfassend:
Kommunizieren (430) von Informationen über verfügbare Anwendungsressourcen der Rechenvorrichtung durch die Rechenvorrichtung und über das Personal-Area-Network-Protokoll mit der einen oder den mehreren entfernten Vorrichtungen (110B ... 110N, 310B, 310C); und
Verhandeln (440) einer Übertragung von mindestens einigen der verfügbaren Anwendungsressourcen (322) der Rechenvorrichtung zu jeder der einen oder den mehreren entfernten Vorrichtungen, um die von jeder der einen oder den mehreren entfernten Vorrichtungen erforderlichen Anwendungsressourcen zu erfüllen, durch die Rechenvorrichtung und über das Personal-Area-Network-Protokoll mit jeder der einen oder den mehreren entfernten Vorrichtungen,
wobei das Implementieren der Übertragung über den einen oder die mehreren jeweiligen Kommunikationskanäle ferner das Senden durch die Rechenvorrichtung an jede der einen oder der mehreren entfernten Vorrichtungen über den einen oder die mehreren jeweiligen Kommunikationskanäle umfasst, wobei mindestens einige der verfügbaren Anwendungsressourcen der Rechenvorrichtung mindestens einige der Anwendungsressourcen erfüllen, die für jede der einen oder der mehreren entfernten Vorrichtungen erforderlich sind.

3. Verfahren nach einem der Ansprüche 1-2, wobei das Implementieren der Übertragung über den einen oder die mehreren jeweiligen Kommunikationskanäle Empfangen durch die Rechenvorrichtung von jeder der einen oder der mehreren entfernten Vorrichtungen über den einen oder die mehreren jeweiligen Kommunikationskanäle umfasst, wobei mindestens einige verfügbare Anwendungsressourcen jeder der einen oder mehreren entfernten Vorrichtungen an die Rechenvorrichtung mindestens einige der Anwendungsressourcen erfüllen, die für die Rechenvorrichtung erforderlich sind.

4. Verfahren nach einem der Ansprüche 1-3, wobei Ausführen des Aktualisierungszyklus der einen oder der mehreren Anwendungen, die auf der Rechenvorrichtung ausgeführt werden, das Bereitstellen des Zugriffs der einen oder der mehreren Anwendungen auf die mindestens einigen verfügbaren Anwendungsressourcen jeder der einen oder der mehreren entfernten Vorrichtungen, die während der Übertragung empfangen wurden, umfasst.

5. Verfahren nach Anspruch 4, wobei die eine oder die mehreren Anwendungen eine bestimmte Anwendung umfassen und das Ausführen des Aktualisierungszyklus der einen oder der mehreren Anwendungen, die auf der Rechenvorrichtung ausgeführt werden, das Aktualisieren der bestimmten Anwendung von einer ersten Version der bestimmten Anwendung auf eine zweite Version der bestimmten Anwendung unter Verwendung von mindestens einigen verfügbaren Anwendungsressourcen jedes der einen oder der mehreren entfernten Vorrichtungen, die während der Übertragung empfangen wurden, umfasst.

6. Verfahren nach einem der Ansprüche 1-5, wobei die eine oder die mehreren entfernten Vorrichtungen eine Vielzahl von entfernten Vorrichtungen sind, die die Angabe empfängt, dass die Rechenvorrichtung den Aktualisierungszyklus initiiert, wobei das Verfahren ferner Folgendes umfasst:
Kommunizieren von jeweiligen Informationen über mindestens eines von Folgendem mit jeder entfernten Vorrichtung aus der Vielzahl von entfernten Vorrichtungen: verfügbare Anwendungsressourcen der Rechenvorrichtung oder Anwendungsressourcen, die für diese bestimmte entfernte Vorrichtung erforderlich sind;
Verhandeln mit jeder entfernten Vorrichtung aus der Vielzahl von entfernten Vorrichtungen über eine jeweilige Übertragung von mindestens eines von Folgendem:
den mindestens einigen der verfügbaren Anwendungsressourcen der Rechenvorrichtung auf diese entfernte Vorrichtung, um die Anwendungsressourcen zu erfüllen, die für diese bestimmte entfernte Vorrichtung erforderlich sind; oder
mindestens einiger verfügbarer Anwendungsressourcen dieser bestimmten entfernten Vorrichtung auf die Rechenvorrichtung, um mindestens einige der Anwendungsressourcen zu erfüllen, die für die Rechenvorrichtung erforderlich sind;
Einrichten eines entsprechenden Kommunikationskanals zum Implementieren der entsprechenden Übertragung mit dieser bestimmten entfernten Vorrichtung für jede entfernte Vorrichtung aus der Vielzahl von entfernten Vorrichtungen; und
Implementieren der jeweiligen Übertragung über den jeweiligen Kommunikationskanal dieser bestimmten entfernten Vorrichtung aus der Vielzahl von entfernten Vorrichtungen.

7. Verfahren nach einem der Ansprüche 1-6, ferner umfassend:
Bestimmen einer jeweiligen Anwendungsressource, die für jede Anwendung von der einen oder den mehreren Anwendungen, die auf der Rechenvorrichtung ausgeführt werden, erforderlich ist, durch die Rechenvorrichtung; und
Bestimmen der für die Rechenvorrichtung erforderlichen Anwendungsressourcen durch Zusammenfassen aller jeweiligen Anwendungsressourcen, die für die eine oder die mehreren Anwendungen erforderlich sind, die auf der Rechenvorrichtung ausgeführt werden.

8. Verfahren nach Anspruch 7, wenn es von Anspruch 2 abhängig ist, ferner umfassend:
während des Kommunizierens mit der einen oder den mehreren entfernten Vorrichtungen:
Bestimmen, ob eine der einen oder der mehreren Anwendungen, die auf der Rechenvorrichtung ausgeführt werden, über eine entsprechende verfügbare Anwendungsressource verfügt, die mindestens eine der Anwendungsressourcen erfüllt, die von jeder der einen oder der mehreren entfernten Vorrichtungen erforderlich sind, durch die Rechenvorrichtung; und
Bestimmen der verfügbaren Anwendungsressourcen der Rechenvorrichtung durch Zusammenfassen aller jeweils verfügbaren Anwendungsressourcen der einen oder der mehreren Anwendungen, die auf der Rechenvorrichtung ausgeführt werden, die die Anwendungsressourcen erfüllen, die für jede der einen oder der mehreren entfernten Vorrichtungen erforderlich sind.

9. Verfahren nach einem der Ansprüche 7-8, ferner umfassend:
Zusammenfassung aller jeweils verfügbaren Anwendungsressourcen der einen oder der mehreren Anwendungen, die auf der Rechenvorrichtung ausgeführt werden, durch eine Download-Manager-Komponente der Rechenvorrichtung, die einzeln mit jeder der einen oder mehreren Anwendungen kommuniziert, die auf der Rechenvorrichtung ausgeführt werden, um als konsolidierte Gruppierung der verfügbaren Anwendungsressourcen der Rechenvorrichtung die Anwendungsressourcen zu bestimmen, die die Anwendungsressourcen erfüllen, die für jede der einen oder der mehreren entfernten Vorrichtungen erforderlich sind.

10. Verfahren nach einem der Ansprüche 1-9, wobei die Rechenvorrichtung und die eine oder die mehreren entfernten Vorrichtungen jeweils eine andere mobile Rechenvorrichtung umfassen.

11. Verfahren nach einem der Ansprüche 1-10,
wobei das Aussenden der Angabe, dass die Rechenvorrichtung den Aktualisierungszyklus initiiert, das Aussenden der Angabe über ein drahtloses Bluetooth^{®}-Kommunikationssignal umfasst, das von jedem der einen oder der mehreren entfernten Vorrichtungen empfangen wird, und
wobei das Einrichten des einen oder der mehreren jeweiligen Kommunikationskanäle das Einrichten eines Wi-Fi^{®}-Hotspots durch die Rechenvorrichtung umfasst, auf den von der entfernten Vorrichtung aus zugegriffen werden kann.

12. Verfahren nach einem der Ansprüche 1-11, wobei die Rechenvorrichtung eine erste mobile Rechenvorrichtung umfasst und die eine oder die mehreren entfernten Vorrichtungen eine zweite mobile Rechenvorrichtung umfassen, die sich von der ersten mobilen Rechenvorrichtung unterscheidet.

13. Rechenvorrichtung (110, 310), umfassend Mittel zum Durchführen eines der Verfahren nach Anspruch 1-12.

14. Computerlesbares Speichermedium, umfassend Anweisungen, die bei Ausführung mindestens einen Prozessor einer Rechenvorrichtung dazu veranlassen, ein der Verfahren nach Anspruch 1-12 durchzuführen.

## Revendications

1. Procédé comprenant :
la diffusion (410), par un dispositif informatique (110A, 310A) et via un protocole de réseau personnel, d'une indication selon laquelle le dispositif informatique lance un cycle de mise à jour d'une ou plusieurs applications s'exécutant sur le dispositif informatique, dans lequel un cycle de mise à jour d'une application nécessite une ou plusieurs ressources d'application ;
la communication (430), par le dispositif informatique et via le protocole de réseau personnel, avec un ou plusieurs dispositifs distants (110B ... 110N, 310B, 310C) identifiés comme étant à portée du dispositif informatique et qui ont reçu l'indication selon laquelle le dispositif informatique lance le cycle de mise à jour, d'informations sur des ressources d'application requises par le dispositif informatique ;
la négociation (440), par le dispositif informatique et via le protocole de réseau personnel, avec chacun des un ou plusieurs dispositifs distants, d'un transfert de :
au moins certaines ressources d'application disponibles (322) de chacun des un ou plusieurs dispositifs distants au dispositif informatique pour satisfaire au moins certaines des ressources d'application requises par le dispositif informatique ;
l'établissement (450), par le dispositif informatique, avec chacun des un ou plusieurs dispositifs distants, d'un ou plusieurs canaux de communication respectifs pour mettre en œuvre le transfert ; et
en réponse à la mise en œuvre (460) du transfert sur les un ou plusieurs canaux de communication respectifs, l'achèvement (470), par le dispositif informatique, de l'exécution du cycle de mise à jour des une ou plusieurs applications s'exécutant sur le dispositif informatique.

2. Procédé selon la revendication 1, comprenant également :
la communication (430), par le dispositif informatique et via le protocole de réseau personnel, avec les un ou plusieurs dispositifs distants (110B ... 110N, 310B, 310C), d'informations sur les ressources d'application disponibles du dispositif informatique ; et
la négociation (440), par le dispositif informatique et via le protocole de réseau personnel, avec chacun des un ou plusieurs dispositifs distants, d'un transfert d'au moins certaines des ressources d'application disponibles (322) du dispositif informatique vers chacun des un ou plusieurs dispositifs distants pour satisfaire des ressources d'application requises par chacun des un ou plusieurs dispositifs distants,
dans lequel la mise en œuvre du transfert sur les un ou plusieurs canaux de communication respectifs comprend également l'envoi, par le dispositif informatique, à chacun des un ou plusieurs dispositifs distants via les un ou plusieurs canaux de communication respectifs, d'au moins certaines des ressources d'application disponibles du dispositif informatique pour satisfaire au moins certaines des ressources d'application requises par chacun des un ou plusieurs dispositifs distants.

3. Procédé selon l'une quelconque des revendications 1 et 2, dans lequel la mise en œuvre du transfert sur les un ou plusieurs canaux de communication respectifs comprend la réception, par le dispositif informatique, en provenance de chacun des un ou plusieurs dispositifs distants via les un ou plusieurs canaux de communication respectifs, d'au moins certaines des ressources d'application disponibles de chacun des un ou plusieurs dispositifs distants au dispositif informatique pour satisfaire au moins certaines des ressources d'application requises par le dispositif informatique.

4. Procédé selon l'une quelconque des revendications 1 à 3, dans lequel l'exécution du cycle de mise à jour des une ou plusieurs applications s'exécutant sur le dispositif informatique comprend la fourniture aux une ou plusieurs applications d'un accès à au moins certaines ressources d'application disponibles de chacun des un ou plusieurs dispositifs distants reçus pendant le transfert.

5. Procédé selon la revendication 4, dans lequel les une ou plusieurs applications comprennent une application particulière et l'exécution du cycle de mise à jour des une ou plusieurs applications s'exécutant sur le dispositif informatique comprend la mise à jour de l'application particulière d'une première version de l'application particulière vers une seconde version de l'application particulière en utilisant au moins certaines des ressources d'application disponibles de chacun des un ou plusieurs dispositifs distants reçus pendant le transfert.

6. Procédé selon l'une quelconque des revendications 1 à 5, dans lequel les un ou plusieurs dispositifs distants sont une pluralité de dispositifs distants qui reçoivent l'indication selon laquelle le dispositif informatique lance le cycle de mise à jour, le procédé comprenant également :
la communication, avec chaque dispositif distant parmi la pluralité de dispositifs distants, d'informations respectives concernant au moins l'une parmi : des ressources d'application disponibles du dispositif informatique ou des ressources d'application requises par ce dispositif distant particulier ;
la négociation, avec chaque dispositif distant parmi la pluralité de dispositifs distants, d'un transfert respectif d'au moins un des éléments suivants :
au moins certaines des ressources d'application disponibles du dispositif informatique vers ce dispositif distant pour satisfaire des ressources d'application requises par ce dispositif distant particulier ; ou
au moins certaines ressources d'application disponibles de ce dispositif distant particulier vers le dispositif informatique pour satisfaire au moins certaines des ressources d'application requises par le dispositif informatique ;
l'établissement, avec chaque dispositif distant parmi la pluralité de dispositifs distants, d'un canal de communication respectif pour mettre en œuvre le transfert respectif avec ce dispositif distant particulier ; et
la mise en œuvre du transfert respectif via le canal de communication respectif de ce dispositif distant particulier parmi la pluralité de dispositifs distants.

7. Procédé selon l'une quelconque des revendications 1 à 6, comprenant également :
la détermination, par le dispositif informatique, d'une ressource d'application respective requise par chaque application parmi les une ou plusieurs applications s'exécutant sur le dispositif informatique ; et
la détermination, par regroupement de toutes les ressources d'application respectives requises par les une ou plusieurs applications s'exécutant sur le dispositif informatique, des ressources d'application requises par le dispositif informatique.

8. Procédé selon la revendication 7 lorsqu'elle dépend de la revendication 2, comprenant également :
lors de la communication avec les un ou plusieurs dispositifs distants :
le fait de déterminer, par le dispositif informatique, si l'une quelconque des une ou plusieurs applications s'exécutant sur le dispositif informatique dispose d'une ressource d'application disponible respective qui satisfait au moins l'une des ressources d'application requises par chacun des un ou plusieurs dispositifs distants ; et
la détermination, par regroupement de toutes les ressources d'application disponibles respectives des une ou plusieurs applications s'exécutant sur le dispositif informatique, des ressources d'application disponibles du dispositif informatique qui satisfont les ressources d'application requises par chacun des un ou plusieurs dispositifs distants.

9. Procédé selon l'une quelconque des revendications 7 et 8, comprenant également :
le regroupement, par un composant de gestionnaire de téléchargement du dispositif informatique qui communique individuellement avec chacune des une ou plusieurs applications s'exécutant sur le dispositif informatique, de toutes les ressources d'application disponibles respectives des une ou
plusieurs applications exécutées sur le dispositif informatique pour déterminer, en tant que regroupement consolidé des ressources d'application disponibles du dispositif informatique qui satisfont les ressources d'application requises par chacun des un ou plusieurs dispositifs distants.

10. Procédé selon l'une quelconque des revendications 1 à 9, dans lequel le dispositif informatique et les un ou plusieurs dispositifs distants comprennent chacun un dispositif informatique mobile différent.

11. Procédé selon l'une quelconque des revendications 1 à 10, dans lequel la diffusion de l'indication selon laquelle le dispositif informatique lance le cycle de mise à jour comprend la diffusion de l'indication via un signal de communication sans fil Bluetooth^{®} qui est reçu par chacun des un ou plusieurs dispositifs distants, et
dans lequel l'établissement des un ou de plusieurs canaux de communication respectifs comprend l'établissement, par le dispositif informatique, d'un point d'accès Wi-Fi^{®} accessible au dispositif distant.

12. Procédé selon l'une quelconque des revendications 1 à 11, dans lequel le dispositif informatique comprend un premier dispositif informatique mobile et les un ou plusieurs dispositifs distants comprennent un second dispositif informatique mobile qui est différent du premier dispositif informatique mobile.

13. Dispositif informatique (110, 310) comprenant un moyen pour réaliser l'un quelconque des procédés selon les revendications 1 à 12.

14. Support de stockage lisible par ordinateur comprenant des instructions qui, lorsqu'elles sont exécutées, amènent au moins un processeur d'un dispositif informatique à réaliser le procédé selon l'une quelconque des revendications 1 à 12.
